# EUROPÄISCHE PATENTSCHRIFT

(11) **EP 3 472 471 B1**
(45) Veröffentlichungstag und Bekanntmachung des Hinweises auf die Patenterteilung: **23.02.2022**
(21) Anmeldenummer: 17729865.0
(22) Anmeldetag: 13.06.2017
(51) Int. Cl.: F04D 19/04, G01M 3/20, F04D 29/10

(54) **MASSENSPEKTROMETRISCHER LECKSUCHER MIT TURBOMOLEKULARPUMPE UND BOOSTERPUMPE AUF GEMEINSAMER WELLE**
MASS SPECTROMETRIC LEAK DETECTOR WITH TURBOMOLECULAR PUMP AND BOOST PUMP ON THE SAME SHAFT
DÉTECTEUR DE FUITE À SPECTROMÈTRE DE MASSE AVEC POMPE TURBOMOLÉCULAIRE ET POMPE DE SURPRESSION SUR LE MÊME ARBRE

(30) Priorität: 15.06.2016 DE 102016210701
(43) Veröffentlichungstag der Anmeldung: 24.04.2019
(73) Patentinhaber: Inficon GmbH, 50968 Köln (DE)
(72) Erfinder: GROSSE BLEY, Werner, 50968 Köln (DE); BÖHM, Thomas, 50968 Köln (DE); BRUHNS, Hjalmar, Fayetteville, NY (US)
(74) Vertreter: dompatent von Kreisler Selting Werner - Partnerschaft von Patent- und Rechtsanwälten mbB
(86) Internationale Anmeldenummer: PCT/EP2017/064434
(87) Internationale Veröffentlichungsnummer: WO 2017/216173

(56) Entgegenhaltungen:
- EP-A1- 0 344 345
- EP-A2- 1 503 199
- DE-A1- 2 049 117
- DE-A1- 10 004 271

## Beschreibung

Die Erfindung betrifft einen massenspektrometrischen Lecksucher mit einer mehrstufigen Turbomolekularpumpe und einer Boosterpumpstufe.

Bei einem massenspektrometrischen Lecksucher wird der Prüfling oder eine den Prüfling umgebende Testkammer mit einer typischerweise mehrstufigen Turbomolekularpumpe evakuiert und der Gasstrom einem Massenspektrometer zur Analyse des abgesaugten Gases zugeführt. Dem Massenspektrometer wird dabei nur ein Teil des insgesamt abgezogenen Gases zugeführt. Ein solcher massenspektrometrischer Lecksucher ist beispielsweise in DE 197 35 250 A1 und DE 20 49 117 A1 beschrieben. Als Prüfgas für die Lecksuche wird typischerweise Helium verwendet.

Es ist weiterhin bekannt, den mit dem Prüfling oder der Prüfkammer verbundenen Gasleitungsweg eines solchen massenspektrometrischen Lecksuchers mit einer Boosterpumpe zu versehen, um eine schnelle Evakuierung des Prüflings oder der Prüfkammer, höhere Empfindlichkeit, sowie schnellere Ansprechzeiten bei großen Volumina zu erreichen. Ein solcher Lecksucher mit Boosterpumpe ist in US 2006/0280615 A1 beschrieben. Das Massenspektrometer ist über eine zweistufige Turbomolekularpumpe, deren Pumpstufen auf einer gemeinsamen Welle angeordnet sind, mit einer Vorvakuumpumpe verbunden. Eine Boosterpumpe ist in dem mit dem Prüfling verbindbaren Gasleitungsweg vorgesehen. Dabei ist die Saugseite der Boosterpumpe mit dem Prüfling verbunden, während die Druckseite der Boosterpumpe mit einem Zwischengaseinlass zwischen den beiden Pumpstufen der Turbomolekularpumpe und zudem mit dem Gasleitungsweg zwischen der Turbomolekularpumpe und der Vorvakuumpumpe verbunden ist. Jeder dieser Gasleitungswege weist dabei ein eigenes Ventil auf.

Von besonderer Bedeutung ist bei derartigen herkömmlichen massenspektrometrischen Lecksuchern mit Boosterpumpe, dass die Boosterpumpe einen eigenen Antrieb aufweist, der typischerweise auf der Druckseite der Boosterpumpe angeordnet ist. Damit ist der Antrieb der Boosterpumpe über den Zwischengaseinlass der mehrstufigen Turbomolekularpumpe mit dem Massenspektrometer und mit dem Messweg für die Gasanalyse verbunden. Der Antrieb der Boosterpumpe kann dadurch den Messweg verunreinigen und die Analyse durch das Massenspektrometer beeinträchtigen. In dem Antrieb der Boosterpumpe kann sich beispielsweise Helium ansammeln, das über den Messweg in das Massenspektrometer gelangt und dort das Messergebnis verfälscht.

Ferner sind zum Beispiel aus EP 0 344 345 A1 massenspektrometrische Lecksuchanordnungen bekannt, bei denen mehrere Pumpstufen auf einer gemeinsamen Welle angeordnet sind. Der Antrieb der Pumpstufen ist am niederdruckseitigen Ende der Welle und somit auf der Seite des Massenspektrometers angeordnet. Entsprechendes gilt für die Lager der Welle. Auch hier kann im Pumpenantrieb oder im Wellenlager angesammeltes Helium über den Messweg in das Massenspektrometer gelangen und somit das Messergebnis verfälschen.

Der Erfindung liegt die Aufgabe zugrunde, einen verbesserten massenspektrometrischen Lecksucher mit mehrstufiger Turbomolekularpumpe (TMP) und mit Boosterpumpe zu schaffen, bei dem der Antrieb der TMP, der mit Helium verunreinigt werden kann, möglichst effektiv vom Massenspektrometer getrennt ist.

Der erfindungsgemäße Lecksucher ist definiert durch die Merkmale von Patentanspruch 1.

Demnach sind die Pumpstufen der Turbomolekularpumpe und die Boosterpumpe auf einer gemeinsamen Welle angeordnet und mit einem gemeinsamen Antrieb versehen. Die Boosterpumpe ist dabei eine Pumpstufe einer mehrstufigen Vakuumpumpe, die auch die Pumpstufen der Turbomolekularpumpe umfasst. Die Boosterpumpstufe ist saugseitig mit einem Anschluss für den Prüfling versehen. Vorliegend ist mit einem Anschluss für den Prüfling auch der Anschluss für eine den Prüfling aufweisende Prüfkammer gemeint. Die Druckseite der Boosterpumpstufe ist über einen Gasleitungsweg mit der Druckseite der Turbomolekularpumpe und mit der Saugseite der Vorvakuumpumpe verbunden.

Um zu verhindern, dass der Antrieb der Welle für die Pumpstufen der Turbomolekularpumpe und der Boosterpumpstufe den Messweg zum Massenspektrometer hin verunreinigt, ist der Gasleitungsweg zwischen der Druckseite der Boosterpumpstufe und der Saugseite der mit dem Massenspektrometer verbundenen Pumpstufe der Turbomolekularpumpe durch eine Auftrennung unterbrochen. Dadurch können Gasansammlungen oder andere Verunreinigungen aus dem Antrieb nicht in das Massenspektrometer gelangen. Bei der Auftrennung kann es sich um eine den entsprechenden Gasleitungsweg verschließende Dichtung handeln. Da der Gasleitungsweg von der Boosterpumpstufe über die Welle zum Massenspektrometer hin führt, muss die Dichtung an der Welle eine Drehmomentübertragung der Welle ermöglichen. Dies kann beispielsweise mit Hilfe einer ferrofluidischen Dichtung erreicht werden, die eine Gasdichtung über eine geschlossene Wand erreicht, durch die das Drehmoment der Welle magnetisch übertragen werden kann. Auf beiden Seiten der geschlossenen Wand ist dabei ein Fluid mit Ferropartikeln enthalten. Die Ferropartikel auf der Wandseite mit der angetriebenen Welle werden von der Welle in Rotation versetzt. Die Magnetkräfte der rotierenden Ferropartikel wirken durch die geschlossene Wand hindurch auf die Ferropartikel in dem Fluid auf der anderen Seite der geschlossenen Wand übertragen und regen diese zu einer Rotation an, wodurch der Wellenabschnitt auf dieser Seite der geschlossenen Wand in Rotation versetzt wird. Durch die geschlossene Wand kann kein Gas von der einen Seite auf die andere Seite entlang der Welle gelangen.

Die Turbomolekularpumpe kann insbesondere zweistufig ausgebildet sein. Zusammen mit der Boosterpumpstufe auf derselben Welle wie die beiden Pumpstufen der Turbomolekularpumpe wird somit eine dreistufige Vakuumpumpe gebildet.

Der gemeinsame Pumpenantrieb ist vorzugsweise an dem zwischen den Pumpstufen der Turbomolekularpumpe und der Vorvakuumpumpe liegenden Ende der Turbomolekularpumpe angeordnet, das heißt auf der Druckseite der Turbomolekularpumpe.

Bei der Pumpstufe am druckseitigen Ende der Turbomolekularpumpe kann es sich um eine Molekularpumpstufe oder um eine Holweckstufe handeln. Die Turbomolekularpumpe hat mindestens eine Turbomolekularpumpstufe. Die Boosterpumpstufe ist vorteilhafterweise als Turbomolekularpumpstufe ausgebildet, um ein hohes Saugvermögen für Helium zu erzielen.

Die Erfindung basiert auf dem Gedanken, einen massenspektrometrischen Lecksucher mit mehrstufiger Turbomolekularpumpe und Boosterpumpstufe zu schaffen, bei dem sämtliche Pumpstufen auf nur einer Welle angeordnet sind und von nur einem gemeinsamen Antrieb angetrieben werden. Der Aufbau des Lecksuchers ist dadurch günstiger und technisch vereinfacht. Um zu verhindern, dass der Antrieb einer solchen mehrstufigen Pumpenanordnung das Massenspektrometer verunreinigt und somit das Messergebnis verfälscht, ist eine Auftrennung des Gasleitungswegs zwischen der Boosterpumpstufe und der mit dem Massenspektrometer verbundenen Pumpstufe vorgesehen.

Im Folgenden werden anhand der Figuren Ausführungsbeispiele der Erfindung näher erläutert. Es zeigen:
- Fig. 1: eine aus dem Stand der Technik bekannte herkömmliche Anordnung,
- Fig. 2: ein Ausführungsbeispiel der Erfindung in schematischer Darstellung,
- Fig. 3: ein nicht erfindungsgemäßes Ausführungsbeispiel der Anordnung gemäß Fig. 2,
- Fig. 4: das nicht erfindungsgemäßes Ausführungsbeispiel nach Fig. 3 in seiner Darstellung schematisch angelehnt an Fig. 1,
- Fig. 5: ein nicht erfindungsgemäßes Ausführungsbeispiel mit Ventilen zur Steuerung eines Abpump-/Messzyklus.

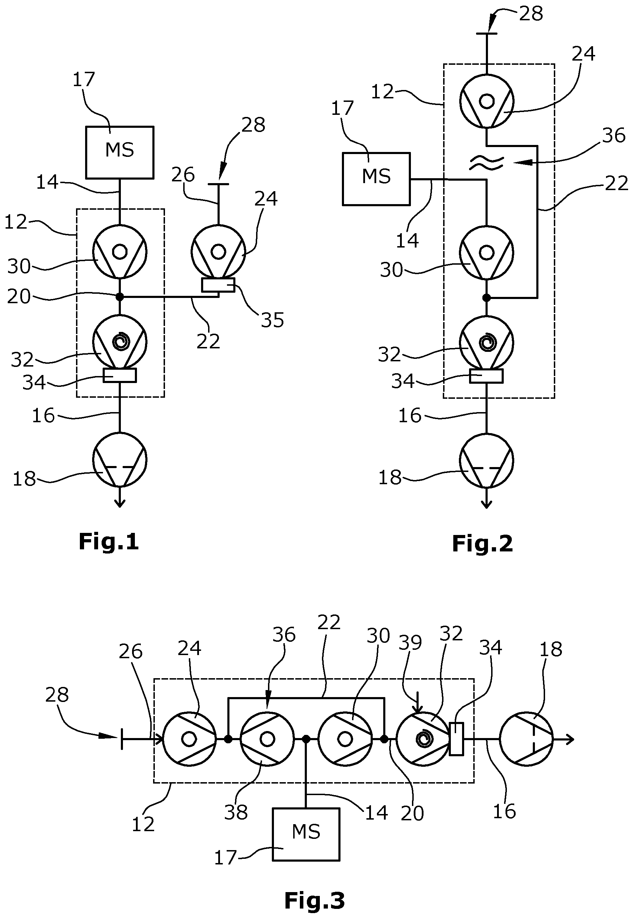

Fig. 1 zeigt in schematischer Darstellung einen aus dem Stand der Technik bekannten massenspektrometrischen Lecksucher mit mehrstufiger Turbomolekularpumpe 12, deren Saugseite über einen Gasleitungsweg 14 mit einem Massenspektrometer 17 verbunden ist und deren Druckseite über einen Gasleitungsweg 16 mit der Saugseite einer Vorvakuumpumpe 18 verbunden ist. Die Turbomolekularpumpe 12 weist einen Zwischengasanschluss 20 auf, der über einen weiteren Gasleitungsweg 22 mit der Druckseite einer Boosterpumpe 24 verbunden ist. Saugseitig ist die Boosterpumpe 24, bei der es sich ebenfalls um eine Turbomolekularpumpe handelt, über einen Gasleitungsweg 26 mit einem Anschluss 28 für einen zu untersuchenden Prüfling oder eine den Prüfling enthaltende Prüfkammer verbunden. Die Turbomolekularpumpe 12 ist zweistufig mit einer Turbomolekularpumpstufe 30 und einer Molekularpumpstufe 32 ausgebildet. Die Turbomolekularpumpstufe 30 und die Molekularpumpstufe 32 sitzen auf einer gemeinsamen, in Fig. 1 nicht dargestellten, Welle und werden von einem gemeinsamen Pumpenantrieb 34 angetrieben. Der Pumpenantrieb 34 ist auf der Druckseite der Turbomolekularpumpe 12 angeordnet, das heißt zwischen der Druckseite der Molekularpumpstufe 32 und der Saugseite der Vorvakuumpumpe 18. Der Zwischengasanschluss 20 verbindet die Druckseite der Boosterpumpe 24 mit der Druckseite der Turbomolekularpumpstufe 30 und der Saugseite der Molekularpumpstufe 32. Der Antrieb 35 der Boosterpumpe 24 befindet sich direkt im Messweg der Leitungen 22, 26, die vom Prüfling 28 kommen, wodurch angesammeltes Helium aus atmosphärischer Luft beim Abpumpvorgang in dem Antrieb 35 akkumuliert wird, nach Erreichen niedriger Druckbedingungen langsam wieder entweicht, und somit bei der Messung ins Massenspektrometer gelangt.

Ein das Grundprinzip der Erfindung veranschaulichendes Ausführungsbeispiel ist in Fig. 2 dargestellt. Der Grundgedanke der Erfindung besteht darin, die Boosterpumpe 24 als eine weitere Pumpstufe der Turbomolekularpumpe 12 auszubilden. Die Boosterpumpstufe 24 ist dabei auf derselben Welle angeordnet, wie die Turbomolekularpumpstufe 30 und die Molekularpumpstufe 32 der Turbomolekularpumpe 12. Die Boosterpumpstufe 24 wird dabei von demselben und einzigen Pumpenantrieb 34 im Vorvakuumbereich angetrieben, wie die beiden Pumpstufen 30, 32.

Um möglichst frühe Messbereitschaft sicherzustellen muss der Druck im Massenspektrometer 17 kleiner sein als der Druck im Prüfling. Weil die Boosterpumpe 24 aber den Prüflingsdruck zu ihrer Auslassseite hin komprimiert, ist eine Auftrennung 36 des Gasleitungsweges zwischen der Saugseite der Turbomolekularpumpstufe 30 und der Druckseite der Boosterpumpstufe 24 vorgesehen, um den hier zwischenliegenden Gasleitungsweg zu unterbrechen. Die Auftrennung 36 ist durch zwei Wellenlinien in Fig. 2 dargestellt und kann auf verschiedene Weisen erreicht werden.

Bei einer ersten, in den Figuren nicht dargestellten, Variante handelt es sich um eine die Welle zwischen der Boosterpumpstufe 24 und der Turbomolekularpumpstufe 30 umgebende Gasdichtung, die eine Drehmomentübertragung entlang der Welle von dem Antrieb 34 auf die Boosterpumpstufe 24 zulässt. Dies kann beispielsweise mit einer ferrofluidischen Dichtung erreicht werden, bei der über in einem Fluid schwimmende rotierende Ferropartikel das Drehmoment über magnetische Kräfte durch eine geschlossene Wand hindurch übertragen wird.

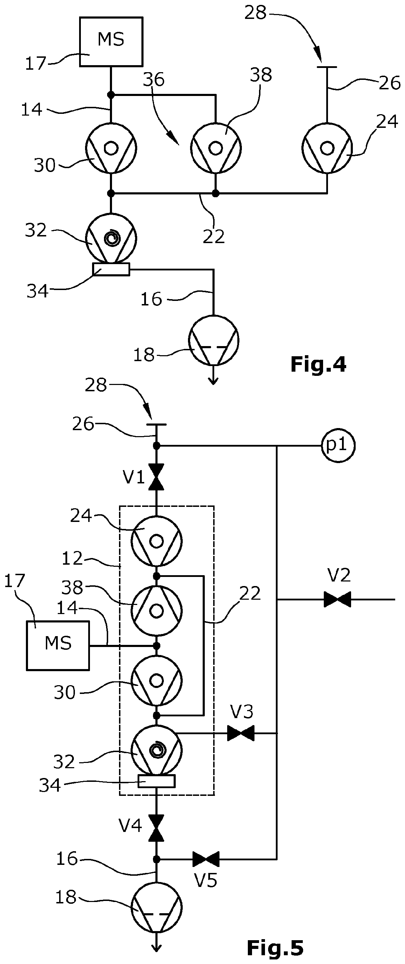

In einem nicht erfindungsgemäßes Beispiel kann die Auftrennung 36 auch mit Hilfe der in den Fign. 3 und 4 dargestellten Trennpumpstufe 38 erreicht werden. Dabei ist die Saugseite der Trennpumpstufe 38 mit dem Gasleitungsweg 14 verbunden, der das Massenspektrometer 17 mit der Saugseite der Turbomolekularpumpstufe 30 verbindet. Die Druckseite der Trennpumpstufe 38 ist mit dem Gasleitungsweg 22 verbunden, der die Druckseite der Boosterpumpstufe 24 mit dem Zwischengaseinlass 20 der Turbomolekularpumpe zwischen den beiden Pumpstufen 30, 32 verbindet.

Fig. 4 verdeutlicht den Unterschied der durch die Trennpumpstufe 38 bewirkten Auftrennung 36 gegenüber der Anordnung gemäß Fig. 1.

Fig. 3 ist eine der Anordnung gemäß Fig. 2 entsprechende Darstellung des nicht erfindungsgemäßen

Ausführungsbeispiels in Fig. 4, bei dem die Auftrennung 36 gemäß Fig. 2 durch die Trennpumpstufe 38 von Fig. 4 bewirkt wird. Die Stufe 24 ist eine reine Turbostufe mit hohem Saugvermögen. Die Stufen 38 und 30 sind auf moderate Kompression von mindestens 10 bis maximal 100 (für Wasserdampf) ausgelegt. Eine dieser beiden Stufen 38, 30, vorzugsweise die Stufe 38, kann alternativ auch als Molekularpumpstufe mit sehr hoher Kompression ausgelegt sein, weil diese nur die Auftrennung 36 realisiert, während die andere Stufe 30 für die Gegenstromfunktion genutzt wird.

Der Gasleitungsweg 22 stellt eine Bypass-Leitung dar, die den Auslass von Stufe 24 mit dem Einlass von Stufe 32 verbindet. Die Stufe 32 kann als reine Schraubenstufe oder als Schraubenstufe mit ein oder mehreren Turbostufen am Einlass ausgelegt werden, um eine hohe Kompression und damit eine möglichst effektive Trennung des Massenspektrometers 17 vom Antrieb 34 zu erzielen. Ein zusätzlicher Anschluss 39 zum Prüfling 28 kann in die Stufe 32 hinein, wie in Fig. 3 dargestellt, oder auch zwischen die Stufen 30 und 32 erfolgen. Dies hängt vom Saugvermögen der Stufe 32 und von der Druckbeständigkeit der Stufen 38 und 30 ab.

Das nicht erfindungsgemäßes Ausführungsbeispiel nach Fig. 5 ist gegenüber dem Ausführungsbeispiel nach Fig. 3 um Ventile V1 - V6 für den Betrieb des Lecksuchers ergänzt.

Der an den Anschluss 28 angeschlossene Prüfling wird zunächst über das Ventil V5 durch die Vorpumpe 18 auf circa 15 Millibar abgepumpt. Anschließend wird das Ventil V4 zum Nachweis großer Leckagen geöffnet und die Lecksuche kann beginnen. Die Atome des Testgases gelangen gegen die Kompression der Stufen 32, 38 und 30 in das Massenspektrometer 17, wo sie detektiert werden. Ab einem p₂-Druck von weniger als 2 mbar erfolgt über das Ventil V3 die Umschaltung auf einen empfindlicheren Einlass, der in die Stufe 32 erfolgt. Das Ventil V3 ist in einem Zwischenanschluss der Pumpstufe 32 vorgesehen. An den Pumpstufen 32, 38 können alternativ oder ergänzend weitere Zwischenanschlüsse vorgesehen sein, um bei geeigneten Druckbedingungen Teile der jeweiligen Pumpstufen zu überbrücken und dadurch die Empfindlichkeit zu erhöhen.

Wird ein p₁-Druck von 0,1 mbar unterschritten, wird über das Ventil V1 in die empfindlichste Betriebsart umgeschaltet, wobei V5 geschlossen wird. Nun wirkt das große Saugvermögen der Boosterpumpstufe 24 auf den Einlass 28 und wirkt so positiv auf die Signalansprechzeit, während die Kompression der Stufe 24 zu einer Überhöhung des Helium-Partialdrucks an der Verbindungsleitung 22 und damit zu einer Erhöhung des Signals im Massenspektrometer 17 führt. Für die Nachweisgrenze des Lecksuchers ist nun das Saugvermögen der Stufe 32 und die Kompression der Stufen 38, 30 bestimmend.

## Patentansprüche

1. Massenspektrometrischer Lecksucher mit
einer mehrstufigen Turbomolekularpumpe (12),
einem mit der Saugseite der Turbomolekularpumpe (12) verbundenen Massenspektrometer (17),
einer mit der Druckseite der Turbomolekularpumpe (12) verbundenen Vorvakuumpumpe (18) und
einer Boosterpumpstufe (24), deren Saugseite einen Anschluss (28) für einen zu testenden Prüfling aufweist und deren Druckseite über einen mit einem Zwischengaseinlass (20) der Turbomolekularpumpe (12) verbundenen ersten Gasleitungsweg (22) mit der Druckseite einer mit dem Massenspektrometer (17) verbundenen Pumpstufe (30) der Turbomolekularpumpe (12) und mit der Saugseite einer mit der Vorvakuumpumpe (18) verbundenen Pumpstufe (32) der Turbomolekularpumpe (12) verbunden ist,
**dadurch gekennzeichnet,**
**dass** die Stufen (30, 32) der Turbomolekularpumpe (12) und die
Boosterpumpstufe (24) auf einer gemeinsamen Welle angeordnet sind und einen gemeinsamen Antrieb (34) aufweisen und
ein zweiter Gasleitungsweg zwischen der Druckseite der mit dem Prüfling verbindbaren Boosterpumpstufe (24) und der Saugseite der mit dem Massenspektrometer (17) verbundenen Pumpstufe (30) der Turbomolekularpumpe (12) durch eine Auftrennung (36) unterbrochen ist, die einen Gasstrom von der Druckseite der Boosterpumpstufe (24) zur Saugseite der mit dem Massenspektrometer (17) verbundenen Pumpstufe (30) verhindert.

2. Lecksucher nach Anspruch 1, **dadurch gekennzeichnet, dass** die Turbomolekularpumpe (12) zweistufig ausgebildet ist.

3. Lecksucher nach Anspruch 1 oder 2, **dadurch gekennzeichnet, dass** die Pumpstufen der Turbomolekularpumpe (12) und die Boosterpumpstufe (24) eine gemeinsame Vakuumpumpe bilden.

4. Lecksucher nach einem der vorhergehenden Ansprüche, **dadurch gekennzeichnet, dass** der Antrieb (34) an dem zwischen den Pumpstufen und der Vorvakuumpumpe (18) liegenden Ende der Turbomolekularpumpe (12) angeordnet ist.

5. Lecksucher nach einem der vorhergehenden Ansprüche, **dadurch gekennzeichnet, dass** eine der Pumpstufen der Turbomolekularpumpe (12) eine Molekularpumpstufe (32) ist und die Turbomolekularpumpe (12) mindestens eine Turbomolekularpumpstufe (30) aufweist.

6. Lecksucher nach einem der vorhergehenden Ansprüche, **dadurch gekennzeichnet, dass** die Boosterpumpstufe (24) eine Turbomolekularpumpstufe ist.

7. Lecksucher nach einem der vorhergehenden Ansprüche, **dadurch gekennzeichnet, dass** die Auftrennung (36) eine den Gasleitungsweg (22) entlang der Welle abschließende Dichtung ist, durch die das Drehmoment der Welle übertragbar ist.

8. Lecksucher nach Anspruch 7, **dadurch gekennzeichnet, dass** die Dichtung durch eine ferrofluidische Dichtung geschaffen wird.

## Claims

1. A mass-spectrometric leak detector comprising
a multi-stage turbomolecular pump (12),
a mass spectrometer (17) connected to the suction side of the turbomolecular pump (12),
a backing pump (18) connected to the pressure side of the turbomolecular pump (12), and
a booster pump stage (24) whose suction side has a connector (28) for a test object to be tested and whose pressure side is connected via a gas conduction path (22) connected to an intermediate gas inlet (20) of the turbomolecular pump (12) to the pressure side of a pump stage (30) of the turbomolecular pump (12) connected to the mass spectrometer (17) and to the suction side of a pump stage (32) of the turbomolecular pump (12) connected to the backing pump (18),
**characterized in that**
the stages (30, 32) of the turbomolecular pump (12) and the booster pump stage (24) are arranged on a common shaft and have a common drive (34), and
a separation (36) interrupts the gas conducting path between the pressure side of the booster pump stage (24) adapted to be connected to the test object and the suction side of the pump stage (30) of the turbomolecular pump stage (12) connected to the mass spectrometer (17), the separation (36) preventing a gas flow from the pressure side of the boost pump stage (24) to the suction side of the pump stage (30) connected to the mass spectrometer (17).

2. The leak detector of claim 1, **characterized in that** the turbomolecular pump (12) is of a two-stage design.

3. The leak detector of claim 1 or 2, **characterized in that** the pump stages of the turbomolecular pump (12) and the booster pump stage (24) form a common vacuum pump.

4. The leak detector of one of the preceding claims, **characterized in that** the drive (34) is arranged at the end of the turbomolecular pump (12) situated between the pump stages and the backing pump (18).

5. The leak detector of one of the preceding claims, **characterized in that** one of the pump stages of the turbomolecular pump (12) is a molecular pump stage (32) and the turbomolecular pump (12) comprises at least one turbomolecular pump stage (30).

6. The leak detector of one of the preceding claims, **characterized in that** the booster pump stage (24) is a turbomolecular pump stage.

7. The leak detector of one of the preceding claims, **characterized in that** the separation (36) is a seal closing the gas conducting path (22) along the shaft, the torque of the shaft being transmissible through the seal.

8. The leak detector of claim 7, **characterized in that** the seal is formed by a ferrofluidic seal.

## Revendications

1. Détecteur de fuite par spectrométrie de masse, comprenant
une pompe turbomoléculaire (12) à plusieurs étages,
un spectromètre de masse (17) relié au côté d'aspiration de la pompe turbomoléculaire (12),
une pompe à vide préliminaire (18) reliée au côté de refoulement de la pompe turbomoléculaire (12), et
un étage de pompe de surpression (24) dont le côté d'aspiration comprend un raccord (28) pour un échantillon à tester et dont le côté de refoulement est relié, par le biais d'un passage de gaz (22) relié à une entrée de gaz intermédiaire (20) de la pompe turbomoléculaire (12), au côté de refoulement d'un étage de pompe (30) relié au spectromètre de masse (17), de la pompe turbomoléculaire (12) et au côté d'aspiration d'un étage de pompe (32) relié à la pompe à vide préliminaire (18), de la pompe turbomoléculaire (12),
**caractérisé en ce que**
les étages (30, 32) de la pompe turbomoléculaire (12) et l'étage de pompe de surpression (24) sont agencés sur un arbre commun et comprennent un entraînement (34) commun et
qu'un second passage de gaz est interrompu par une séparation (36) entre le côté de refoulement de l'étage de pompe surpression (24) pouvant être relié à l'échantillon et le côté d'aspiration de l'étage de pompe (30) de la pompe turbomoléculaire (12) relié au spectromètre de masse (17), qui empêche un écoulement de gaz depuis le côté de refoulement de l'étage de pompe de surpression (24) vers le côté d'aspiration de l'étage de pompe (30) relié au spectromètre de masse (17).

2. Détecteur de fuite selon la revendication 1, **caractérisé en ce que** la pompe turbomoléculaire (12) est réalisée en deux étages.

3. Détecteur de fuite selon la revendication 1 ou 2, **caractérisé en ce que** les étages de pompe de la pompe turbomoléculaire (12) et l'étage de pompe de surpression (24) forment une pompe à vide commune.

4. Détecteur de fuite selon l'une quelconque des revendications précédentes, **caractérisé en ce que** l'entraînement (34) est agencé à l'extrémité de la pompe turbomoléculaire (12) située entre les étages de pompe et la pompe à vide préliminaire (18).

5. Détecteur de fuite selon l'une quelconque des revendications précédentes, **caractérisé en ce que** l'un des étages de pompe de la pompe turbomoléculaire (12) est un étage de pompe moléculaire (32) et la pompe turbomoléculaire (12) comprend au moins un étage de pompe turbomoléculaire (30).

6. Détecteur de fuite selon l'une quelconque des revendications précédentes, **caractérisé en ce que** l'étage de pompe de surpression (24) est un étage de pompe turbomoléculaire.

7. Détecteur de fuite selon l'une quelconque des revendications précédentes, **caractérisé en ce que** la séparation (36) est un joint d'étanchéité qui ferme le passage de gaz (22) le long de l'arbre et à travers lequel le couple de l'arbre peut être transmis.

8. Détecteur de fuite selon la revendication 7, **caractérisé en ce que** le joint d'étanchéité est réalisé par un joint d'étanchéité ferrofluidique.
